# EUROPEAN PATENT APPLICATION

(11) **EP 4 407 171 A1**
(43) Date of publication of application: **31.07.2024**
(21) Application number: 24150261.6
(22) Date of filing: 03.01.2024
(51) Int. Cl.: F02C 7/32

(54) **ACCESSORY GEARBOX COVER LINKAGES**

(30) Priority: 09.01.2023 US 202318151747
(71) Applicant: PRATT & WHITNEY CANADA CORP., Longueuil, Québec J4G 1A1 (CA)
(72) Inventor: BRILLON, Louis, (01BE5) Longueuil, J4G 1A1 (CA); KESEK, Mateusz, (01BE5) Longueuil, J4G 1A1 (CA)
(74) Representative: Dehns

(57) **Abstract**

An accessory gearbox of an aircraft engine includes an accessory gearbox cover (40) mounted to the accessory gearbox. The accessory gearbox cover (40) has an outer surface (42) with accessory mounts (44) disposed thereon. A first accessory device (38a) is mounted to the accessory gearbox at a first mount (44) of the accessory mounts (44). A second accessory device (38b) is mounted to the accessory gearbox cover (40) at a second mount (44) of the accessory mounts (44). The second mount (44) is spaced apart on the accessory gearbox cover (40) from the first mount (44). A link member (56) dynamically couples the first accessory device (38a) to the second accessory device (38b). The link member (56) has an elongate body extending between a first end and a second end. The first end is coupled to the first accessory device (38a) and the second end is coupled to the second accessory device (38b) to mechanically interconnect the first and second accessory devices (38a, 38b) independent from the accessory gearbox cover (40).

## Description

### TECHNICAL FIELD

The disclosure relates generally to aircraft engines and, more particularly, to accessory gearboxes of such engines.

### BACKGROUND

Aircraft engines often include accessory gearboxes (AGBs), which are used to drive various engine accessories. Such engine accessories may be mounted to a cover of the AGB. AGB covers are often thin, relatively light structures, on which a number of heavier masses (i.e., the accessories) are attached. AGB covers are therefore prone to dynamic vibrations and/or resonances during operation of the engine. In addition, certain accessories, such as generators, can induce additional vibrations in the AGB cover due to their own operating unbalances.

The frequencies generated by the vibrations and/or resonances can interfere with engine operating speeds and create structural concerns. However, weight and envelope constraints limit the changes that can be made to the AGB cover to shift the resonant frequencies.

### SUMMARY

In one aspect, there is provided an accessory gearbox of an aircraft engine, comprising an accessory gearbox cover mounted to the accessory gearbox, the accessory gearbox cover having an outer surface with accessory mounts disposed thereon, a first accessory device mounted to the accessory gearbox at a first mount of the accessory mounts, a second accessory device mounted to the accessory gearbox cover at a second mount of the accessory mounts, the second mount being spaced apart on the accessory gearbox cover from the first mount, and a link member dynamically coupling the first accessory device to the second accessory device, the link member having an elongate body extending between a first end and a second end, the first end coupled to the first accessory device and the second end coupled to the second accessory device to mechanically interconnect the first and second accessory devices independent from the accessory gearbox cover.

The accessory gearbox as defined above and herein may, in certain embodiments, include one or more of the following aspects, in whole or in part, and in any combination.

In certain aspects, the link member is secured to a furthest axial position on one of the first accessory device and the second accessory device from the accessory gearbox cover relative to an axis extending normally from the accessory gearbox cover.

In certain aspects, a third accessory device is mounted to the accessory gearbox cover at a third mount of the accessory mounts, wherein a heaviest of the first accessory device, the second accessory device and the third accessory device is coupled, via one of the link member and an additional link member, to a lightest of the first accessory device, the second accessory device and the third accessory device.

In certain aspects, a third accessory device is mounted to the accessory gearbox cover at a third mount of the accessory mounts, wherein the two heaviest of the first accessory device, the second accessory device and the third accessory device are coupled together via one of the link member and an additional link member.

In certain aspects, the elongate body of the link member extends substantially linearly from the first end to the second end.

In certain aspects, a portion of the link member located between the first end and the second end is curved in a direction relative to a planar surface of the elongate body.

In certain aspects, the link member is made of a rigid or a flexible material.

In certain aspects, a dynamic absorber disposed at a position along a length of the elongate body.

In certain aspects, the link member is removably coupled to the first accessory device and the second accessory device.

In certain aspects, one or more additional accessory devices are mounted to the accessory gearbox cover at one or more additional mounts of the accessory mounts and one or more additional link members, wherein the first accessory device is dynamically coupled to the second accessory device via the link member and to at least one or the one or more additional accessory devices via the one or more additional link members.

In certain aspects, an additional link member, wherein the first accessory device is dynamically coupled to the second accessory device via the link member and the additional link member.

In another aspect, there is provided an aircraft engine, comprising, a main shaft extending through a core of the engine, a tower shaft drivingly engaged to the main shaft at a first end of the tower shaft, an accessory gearbox disposed outside of the core of the engine, the accessory gearbox drivingly engaged to the tower shaft at a second end of the tower shaft, the accessory gearbox comprising an accessory gearbox cover mounted to the accessory gearbox, the accessory gearbox cover having an outer surface with accessory mounts disposed thereon, a first accessory device mounted to the accessory gearbox at a first mount of the accessory mounts, a second accessory device mounted to the accessory gearbox cover at a second mount of the accessory mounts, the second mount being spaced apart on the accessory gearbox cover from the first mount, and a link member dynamically coupling the first accessory device to the second accessory device, the link member having an elongate body extending between a first end of the link member and a second end of the link member, the first end of the link member coupled to the first accessory device and the second end of the link member coupled to the second accessory device to mechanically interconnect the first and second accessory devices independent from the accessory gearbox cover.

The aircraft engine as defined above and herein may, in certain embodiments, include one or more of the following aspects, in whole or in part, and in any combination.

In certain aspects, the link member is secured to a furthest axial position on one of the first accessory device and the second accessory device from the accessory gearbox cover relative to an axis extending normally from the accessory gearbox cover.

In certain aspects, a third accessory device is mounted to the accessory gearbox cover at a third mount of the accessory mounts, wherein a heaviest of the first accessory device, the second accessory device and the third accessory device is coupled, via one of the link member and an additional link member, to a lightest of the first accessory device, the second accessory device and the third accessory device.

In certain aspects, a third accessory device is mounted to the accessory gearbox cover at a third mount of the accessory mounts, wherein the two heaviest of the first accessory device, the second accessory device and the third accessory device are coupled together via one of the link member and an additional link member.

In certain aspects, an additional link member, wherein the first accessory device is dynamically coupled to the accessory gearbox cover via the additional link member.

In a further aspect, there is provided a method for securing accessory devices to an accessory gearbox of an aircraft engine, comprising securing a first accessory of the accessory devices to a cover of the accessory gearbox at a first accessory mount disposed on an outer surface of the cover, securing a second accessory of the accessory devices to the cover of the accessory gearbox at a second accessory mount disposed on the outer surface of the cover, the second accessory mount spaced apart from the first accessory mount, and dynamically coupling the first accessory to the second accessory via a mechanical interconnection independent from the cover of the accessory gearbox, by securing a first end of a link member to the first accessory and securing a second end of the link member to the second of the accessory devices.

The method as defined above and herein may, in certain embodiments, include one or more of the following aspects, in whole or in part, and in any combination.

In certain aspects, the method includes securing a third accessory of the accessory devices to the cover of the accessory gearbox at a third accessory mount disposed on the outer surface of the cover; and dynamically coupling the third accessory to one of the first accessory and the second accessory via an additional link member.

In certain aspects, the method includes dynamically coupling, via one of the link member and the additional link member, a heaviest of the first accessory, the second accessory and the third accessory to a lightest of the first accessory, the second accessory and the third accessory.

In certain aspects, the method includes installing a dynamic absorber at a position along a length of the link member.

### BRIEF DESCRIPTION OF THE DRAWINGS

Reference is now made to the accompanying figures in which:
FIG. 1 is a schematic cross sectional view of a gas turbine engine;
FIG. 2 is a perspective view of an accessory gearbox cover with link members between accessory devices, according to an embodiment;
FIG. 3 is a perspective view of a link member for accessory devices, according to an embodiment;
FIG. 4 is a perspective view of a link member for accessory devices, according to an embodiment; and
FIG. 5 is a perspective view of an accessory gearbox cover with links between accessory devices, according to another embodiment.

### DETAILED DESCRIPTION

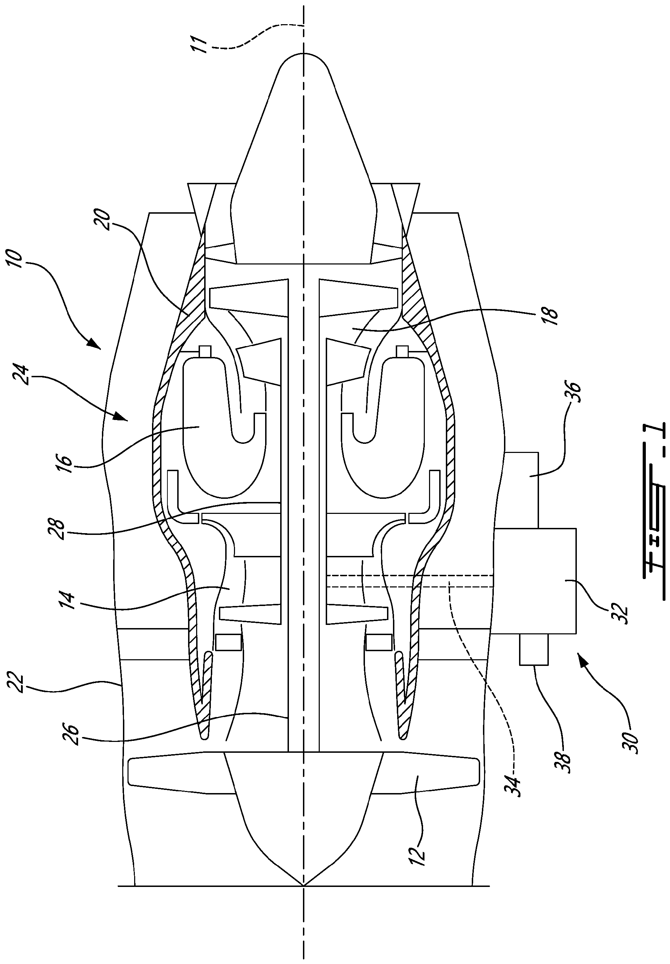

FIG. 1 illustrates an exemplary engine 10, such as a gas turbine engine for example, of a type preferably provided for use in subsonic flight, generally comprising in serial flow communication a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases. A core casing 20 surrounds the compressor section 14, combustor 16, and turbine section 18. A housing or nacelle 22 surrounds the core casing 20 and defines an annular bypass passage 24 therebetween. A low pressure compressor of the compressor section 14 and a low pressure turbine of the turbine section 18 define a low pressure spool assembly 26. A high pressure compressor of the compressor section 14 and a high pressure turbine of the turbine section 18 define a high pressure spool assembly 28. While FIG. 1 illustratively depicts engine 10 to be a multi-spool, turbofan-type engine, the present disclosure is also applicable to other engine types, such as turboprop or turboshaft engines, having one or more spools. The present disclosure may also apply to other types of engines, such as hybrid-electric engines.

The engine 10 further includes an accessory drive gearbox 30 (also referred to as an accessory gearbox, or simply "AGB") which includes generally a housing 32 secured to a mounting face on either the nacelle 22 or the core casing 20. In the depicted embodiment of Fig. 1, the AGB 30 is mounted to the nacelle 22 and a tower shaft 34 is operatively connected (i.e., drivingly engaged) at one end thereof to one of the main shafts, for example a shaft of the high pressure spool assembly 28, and is operatively connected (i.e., drivingly engaged) at the other end thereof to the accessory drive gearbox 30, such as to drive the AGB. Illustratively, the tower shaft 34 and the accessory drive gearbox 30 form a mechanical drive system for transferring engine power to drive one or more accessories of the engine 10. Such accessories may include, for example, an integrated starter generator 36 and one or more other accessory devices indicated schematically at 38 in FIG. 1, such as a fuel pump, a hydraulic pump, etc.

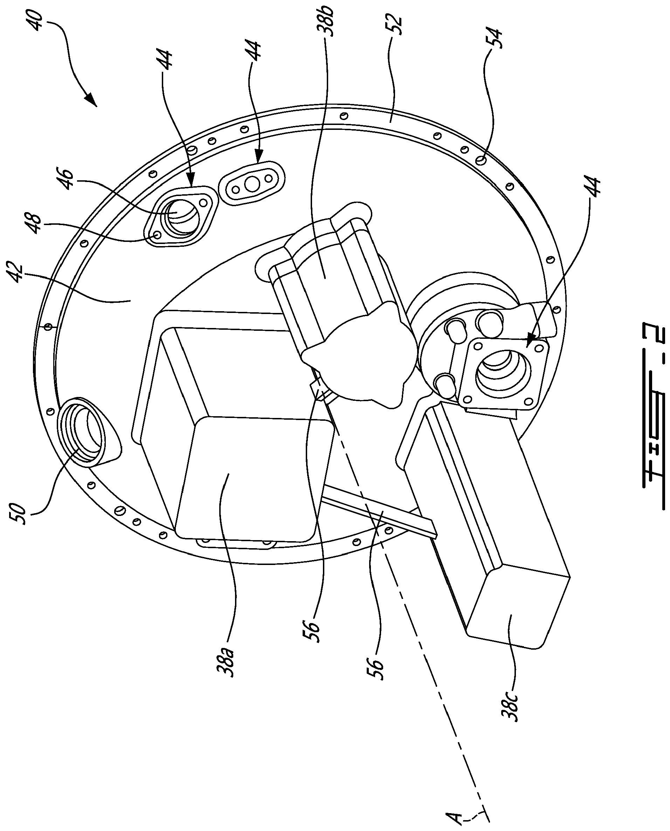

In some embodiments, the housing 32 of the AGB 30 includes a cover (e.g., cover 40 illustrated in FIG. 2) to which one or more accessory devices (e.g., accessory device(s) 38 illustrated in FIG. 2), also referred to as accessories, are mounted. As illustrated in FIG. 2, a first accessory device 38a, a second accessory device 38b, and a third accessory device 38c (collectively referred to as accessory device(s) 38) are mounted to the cover 40. In other examples, a greater or lesser number of accessory device(s) 38 may be mounted to the cover 40. In particular, the cover 40 includes an inner surface and an outer surface 42. The outer surface 42 includes one or more accessory mounts 44 to which the accessory device(s) 38 are mounted. The accessory mounts 44 are spaced apart on the outer surface 42 of the cover 40, as required for the respective accessory device(s) 38 mounted thereto. As such, a first mount of the accessory mounts 44 will thus be spaced apart from a second mount of the accessory mounts 44, for example. Apertures 46 may pass through the accessory mounts 44 and/or the cover 40 for one or more shafts (not shown) of the accessory device(s) 38 to pass through as well, as well as fastener holes 48 to secure the accessory device(s) 38 to the cover 40. Each accessory device 38a, 38b, and 38c may thus be provided with suitable mounting hardware. The cover 40 includes other connectors 50, for instance for the attachment of fluid tubes. As shown in FIG. 2, the connectors 50 may or may not be threaded. The shown cover 40 has a flat and thin structure with a flange 52 along an outer circumference thereof. Other shapes for the cover 40 may be contemplated. The flange 52 illustratively includes fastener holes 54 disposed therethrough along its circumference for attaching the cover 40 to the housing 32 via fasteners (not shown).

As the accessory device(s) 38 are removably mountable to the cover 40, they may be removed and replaced, for instance for servicing. The accessory device(s) 38 may be referred to as overhung masses, as their relative weight compared to the cover 40 to which they are attached may render them prone to dynamic vibrations and/or resonances. In addition, the accessory device(s) 38 may include a generator, which may induce additional vibrations due to its own operating unbalances. Such vibrations may interfere with engine operations and create potential structural concerns, for instance excessive loading on engine components due to high vibration responses.

In accordance with the present technology, therefore, the accessory device(s) 38 are mechanically (i.e. structurally) secured to one another via one or more link members 56. This dynamically coupling of the accessory device(s) 38 to one another (e.g., the first accessory device 38a coupled to the second accessory device 38b, etc.) improves the dynamic characteristics of the accessory gearbox cover 40. Stated differently, the accessory device(s) 38 are mechanically interconnected by the one or more link members 56 independently from the AGB cover 40. In the shown case, a first link member 56 operatively couples the first accessory device 38a to the second accessory device 38b, and a second link member 56 operatively couples the first accessory device 38a to the third accessory device 38c. Other arrangements may be contemplated, for instance an additional or alternative link member 56 operatively coupling the second accessory device 38b to the third accessory device 38c. The number of link members 56 may vary, for instance based on the number of accessory device(s) 38, the shape of the accessory device(s) 38, and the weight of the accessory device(s) 38. Various shapes, sizes and materials may be selected for the link members 56, as will be discussed in further detail below.

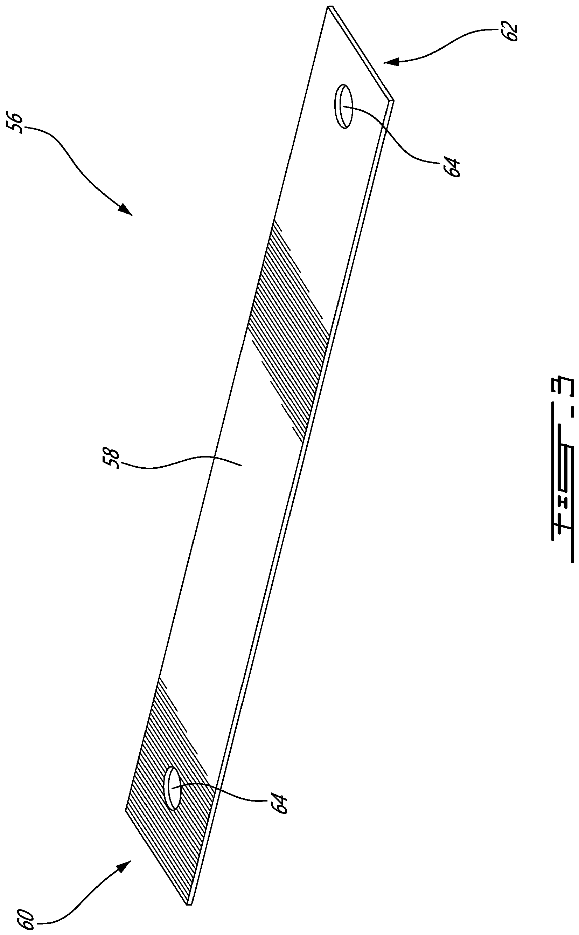

Referring additionally to FIG. 3, the depicted link member 56 has an elongate body 58 extending from a first end 60 to a second end 62. Each end 60, 62 has attachment means 64, illustratively fastener holes 64, for securing operatively coupling a given end 60, 62 to an accessory device 38. As such, in the shown embodiment, but not necessarily the case in all embodiments, the link members 56 are removably coupled to the accessory device(s) 38. While not depicted in FIG. 2, each accessory device 38 is provided with corresponding mounting means to connect to a given end 60, 62. For instance, the first end 60 may be secured to the first accessory device 38a, while the second end 62 may be secured to the second accessory device 38b. In this manner, the various accessory device(s) 38 are secured to one another, in addition to being secured to the cover 40. The accessory device(s) 38 may thus be linked together to create structural bridges therebetween. As will be discussed in further detail below, the link members 56 may be secured to various locations on the accessory device(s) 38, for instance closer or further from the outer surface 42 of the AGB cover 40 relative to a cover axis A extending through a center (illustrated in FIG. 2) of the AGB cover 40 in a direction normal thereto. In some embodiments, the link member(s) 56 may couple one or more accessory device(s) 38 to the cover 40 itself and/or to one or more other accessory device(s) 38. For example, a first link member 56 may couple a first accessory device 38a to the cover 40 such that a first end 60 of the first link member 56 is coupled to the first accessory device 38a and the second end of the first link member 56 is coupled to the cover 40, or vice versa. In such an example, the additional coupling of the first accessory device 38a to the cover 40 may provide additional support for and/or may reduce vibrations caused by the first accessory device 38a due to the additional mechanical link between the first accessory device 38a and the cover 40.

As illustrated in FIG. 2 and described above, two or more accessory devices 38 may be coupled together. By securing the two or more accessory devices 38 together, their respective masses may be coupled as well. The number of link members 56 used and their placement on each accessory device 38 (e.g., at a given distance from the AGB cover 40 along the cover axis A) may be selected in order to change the frequency response of the mounting assembly. Stated differently, by coupling two or more accessory devices 38 together, the vibrations of the coupled accessory devices 38 due to normal engine operations will be intimately linked and be at a different frequency than the vibration frequency of each vibrating accessory device 38 if left uncoupled. The vibration frequency of the coupled accessory devices 38 may thus be tuned, for instance via the number, material, and/or placement of link members 56, to avoid particular frequencies in order to reduce a load on the engine cover 40, for instance to avoid specific engine operating frequencies that may have harmful results. In addition, the link members 56 may provide a damping effect between coupled accessory devices 38 to further reduce the overall load on the cover 40, as will be discussed in further detail below. This damping effect may allow for an overall lighter assembly due to the reduction in loads on the cover 40, allowing for a lighter cover 40.

In cases where a path between accessory devices 38 to be coupled is straight, the link member 56 extends substantially linearly (i.e., it is "straight"), for instance the straight, thin, link member 56 shown in FIG. 3, may be used to secure the accessory devices 38 together. In some cases, the link member 56 may be made of metal for increased stiffness between the coupled accessory devices 38. In such cases, the link member 56 would undergo minimal distortion, and may be suitable when coupling accessory devices 38 where a modal response is the target result. In other cases, the link member 56 may be made from a rubber or other like flexible or stretchable material. Such a material may provide a damping effect between the coupled accessory devices 38, i.e., as the link member 56 stretches when activated due to resonance. Other materials for link members 56, such as composite materials, may be contemplated as well.

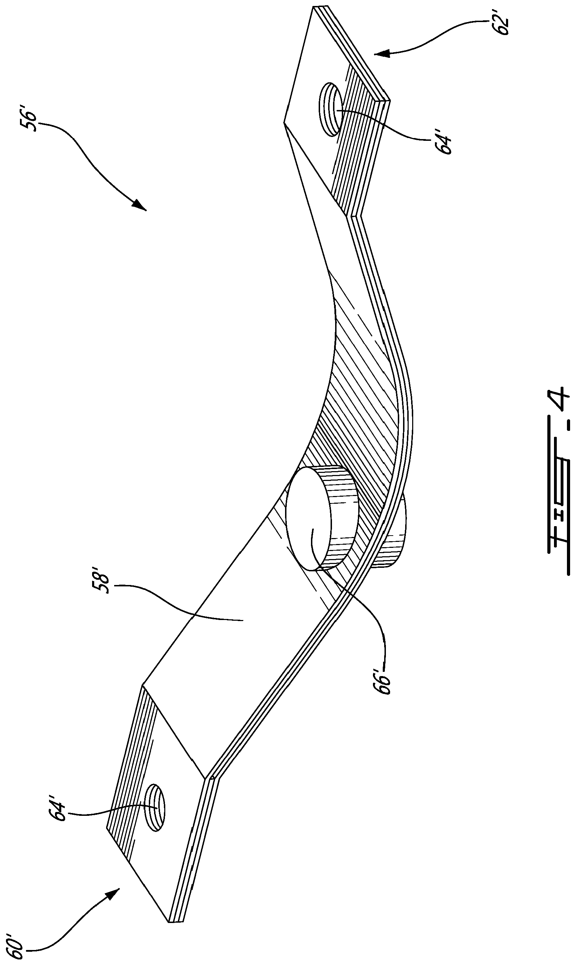

Referring to FIG. 4, another embodiment of a link member 56' is shown. As was the case with the link member 56 shown in FIG. 3, the link member 56' has an elongate body 58' extending from a first end 60' to a second end 62', with attachment means 64', illustratively fastener holes 64', at each end 60', 62'. In this case, a portion of the elongate body 58' is bent or curved. Stated differently, a portion of the link member 56' located between the first end 60' and the second end 62' defines a radius of curvature in a direction relative to a planar surface of the elongate body 58'. Such a shape may allow the link member 56' to flex under stress to dissipate energy. In the shown case, the curvature of the elongate body 58' is symmetric about its length, although asymmetric curvatures along the length of the elongate body 58' may be contemplated as well. The shape of the elongate body 58' may vary, for instance, based on a given path between accessory devices 38 to be coupled. The bent or curved link member 56' may be formed from a metal such as steel, and the bent or curved link member 56' may thus act as a spring to dampen vibrations. Other materials may be contemplated as well. Link member shapes other than straight or curved may be contemplated as well.

Still referring to FIG. 4, in the shown case, but not necessarily in all cases, the link member 56' includes a dynamic absorber 66' on the elongate body 58'. The dynamic absorber 66' may be a strategically-placed mass disposed at a predetermined position along the length of the elongate body 58', illustratively towards a midpoint of the elongate body 58'. The position and/or mass of the dynamic absorber 66' along a length of the link member 56' may vary, and for instance may be predetermined to tune the vibration frequency of accessory devices 38. It is understood that a bent or curved link member 56' may be provided without a dynamic absorber. Likewise, in some cases, the straight link member 56 shown in FIG. 3 may be provided with a dynamic absorber along the length of the elongate body 58'. In the shown case, the dynamic absorber 66' is cylindrically-shaped and protrudes outward from two sides of the elongate body 58'. The dynamic absorber 66' may be operable to match out the phase of an already present resonance and counteract its natural movement by opposing its frequency, i.e., by vibrating at a 180 degree phase shift from the resonant frequency. The dynamic absorber 66' may be welded or otherwise added to a link member 56'. In other cases, the dynamic absorber 66' may be integrally formed, i.e., formed or manufactured as a single piece, with the link member 56'.

As discussed above, the number, size and shape of the link members 56, 56' may vary, for instance based on the number, size and weight of the various accessory devices 38 and the assembly's vibration response needs. In some cases, a combination of straight link members 56 and curved link members 56' may be used. While FIG. 2 shows a single (straight) link member 56 between two accessory devices 38, in some cases two or more link members 56 (e.g., straight link members 56 and/or curved link members 56') may be used to couple the same two accessory devices 38, either stacked one on top of the other or spaced apart from each other. Other shapes for link members 56 may be contemplated as well. In some cases, one or more link members 56, 56' may be positioned at a furthest axial position along the accessory devices 38 from the cover 40 relative to the cover axis A so that one or more of the accessory devices 38 may be coupled at a furthest position possible from their attachment to the cover 40. Other mounting locations for the link members 56, 56' may be contemplated.

As discussed above, in cases where a plurality of accessory devices 38 are mounted to the cover 40 via a conventional mount and/or via one or more link member(s) 56, 56', two or more of the accessory devices 38 may be coupled together via link member(s) 56, 56'. In some cases, each accessory device 38 may be coupled to another accessory device 38 via link member(s) 56, 56'. In other cases, only some of the accessory devices 38 may be linked together via link member(s) 56, 56'. For instance, a heaviest of the accessory devices 38 may be linked to the lightest of the accessory devices 38, as their vibrations would likely vary the most among accessory devices 38. In other cases, the two heaviest or largest accessory devices 38 may be coupled together. Other combinations may be contemplated as well, for instance coupling two or more accessory devices 38 to each other. In some cases, each accessory device 38 may be coupled to only one other accessory device 38. In other cases, one or more accessory devices 38 may be linked to two or more other accessory devices 38.

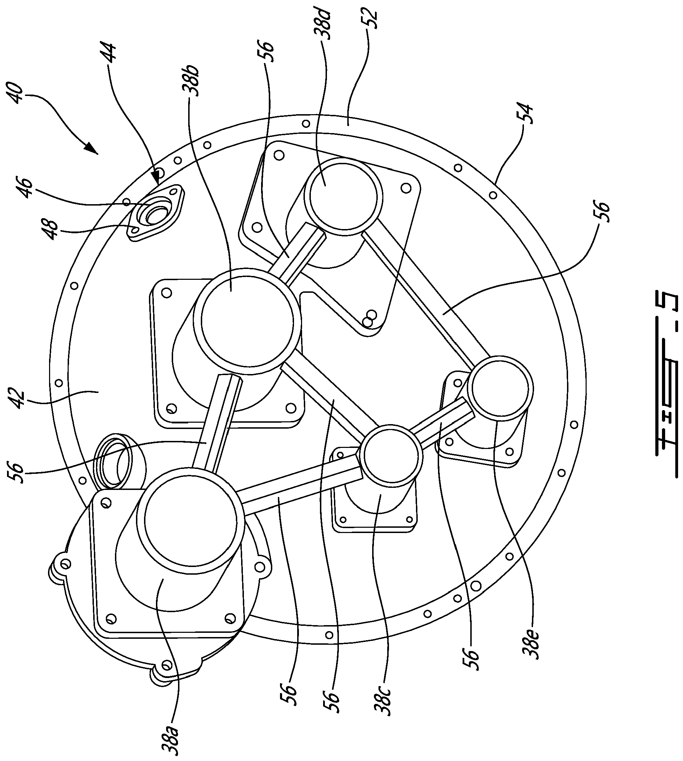

Referring to FIG. 5, another embodiment of a mounting assembly is shown, with like reference numerals referring to like elements. In this case, five accessory devices 38a-38e are mounted to the outer surface 42 of the AGB cover 40 at respective accessory mounts 44. Six link members 56, illustratively having straight elongate bodies 58 as in FIG. 3, couple the various accessory devices 38a-38e together. In particular, a first link member 56 couples the first accessory device 38a to the second accessory device 38b, a second link member 56 couples the first accessory device 38a to the third accessory device 38c, a third link member 56 couples the second accessory device 38b to the third accessory device 38c, a fourth link member 56 couples the second accessory device 38b to the fourth accessory device 38d, a fifth link member 56 couples the third accessory device 38c to the fifth accessory device 38e, and a sixth link member 56 couples the fourth accessory device 38d to the fifth accessory device 38e. As such, the first, fourth and fifth accessory devices 38a, 38d and 38e are each coupled to two other accessory devices 38, while the second and third accessory devices 38b, 38c are each coupled to three other accessory devices 38. Other configurations may be contemplated, as the number, type and position of link members 56 may vary based on the number, size, weight and locations of the various accessory devices 38 and the vibration frequencies to be avoided.

According to the present disclosure, there is taught a method for securing accessory devices 38 to an accessory gearbox 30 of an engine 10. A first accessory device 38a of the accessory devices 38 is secured to a cover 40 of the accessory gearbox 30 at a first accessory mount 44 disposed on an outer surface 42 of the cover 40. A second accessory device 38b of the accessory devices 38 is secured to the cover 40 of the accessory gearbox 30 at a second accessory mount 44 disposed on the outer surface 42 of the cover 40, the second accessory mount 44 spaced apart from the first accessory mount 44. The first accessory device 38a is dynamically coupled to the second accessory device 38b via a mechanical interconnection independent from the accessory gearbox cover 30 by securing a first end 60, 60' of a link member 56, 56' to the first accessory device 38a and securing a second end 62, 62' of the link member 56, 56' to the second accessory device 38b.

The embodiments described in this document provide non-limiting examples of possible implementations of the present technology. Upon review of the present disclosure, a person of ordinary skill in the art will recognize that changes may be made to the embodiments described herein without departing from the scope of the present technology. Yet further modifications could be implemented by a person of ordinary skill in the art in view of the present disclosure, which modifications would be within the scope of the present technology.

## Claims

1. An accessory gearbox (30) of an aircraft engine (10), comprising:
an accessory gearbox cover (40) mounted to the accessory gearbox (30), the accessory gearbox cover (40) having an outer surface (42) with accessory mounts (44) disposed thereon;
a first accessory device (38a) mounted to the accessory gearbox (30) at a first mount (44) of the accessory mounts (44);
a second accessory device (38b) mounted to the accessory gearbox cover (40) at a second mount (44) of the accessory mounts (44), the second mount (44) being spaced apart on the accessory gearbox (30) cover from the first mount (44); and
a link member (56; 56') dynamically coupling the first accessory device (38a) to the second accessory device (38b), the link member (56; 56') having an elongate body (58; 58') extending between a first end (60; 60') and a second end (62; 62'), the first end (60; 60') coupled to the first accessory device (38a) and the second end (62; 62') coupled to the second accessory device (38b) to mechanically interconnect the first and second accessory devices (38a, 38b) independent from the accessory gearbox cover (40).

2. The accessory gearbox as defined in claim 1, wherein the link member (56; 56') is secured to a furthest axial position on one of the first accessory device (38a) and the second accessory device (38b) from the accessory gearbox cover (40) relative to an axis (A) extending normally from the accessory gearbox cover (40).

3. The accessory gearbox as defined in claim 1 or 2, further comprising a third accessory device (38c) mounted to the accessory gearbox cover (40) at a third mount (44) of the accessory mounts (44), wherein a heaviest of the first accessory device (38a), the second accessory device (38b) and the third accessory device (38c) is coupled, via one of the link member (56; 56') and an additional link member (56; 56'), to a lightest of the first accessory device (38a), the second accessory device (38b) and the third accessory device (38c).

4. The accessory gearbox as defined in claim 1 or 2, further comprising a third accessory device (38c) mounted to the accessory gearbox cover (40) at a third mount (44) of the accessory mounts (44), wherein the two heaviest of the first accessory device (38c), the second accessory device (38b) and the third accessory device (38c) are coupled together via one of the link member (56; 56') and an additional link member (56; 56').

5. The accessory gearbox as defined in any one of the preceding claims, wherein the elongate body (58) of the link member (56) extends substantially linearly from the first end (60) to the second end (62).

6. The accessory gearbox as defined in any one of claims 1 to 4, wherein a portion of the link member (56') located between the first end (60') and the second end (62') is curved in a direction relative to a planar surface of the elongate body (58').

7. The accessory gearbox as defined in any one of the preceding claims, wherein the link member (56; 56') is made of a rigid or a flexible material.

8. The accessory gearbox as defined in any one of the preceding claims, further comprising a dynamic absorber (66') disposed at a position along a length of the elongate body (58').

9. The accessory gearbox as defined in any one of the preceding claims, wherein the link member (56; 56') is removably coupled to the first accessory device (38a) and the second accessory device (38b).

10. The accessory gearbox as defined in any one of the preceding claims, further comprising one or more additional accessory devices (38c, 38d, 38e) mounted to the accessory gearbox cover (40) at one or more additional mounts (44) of the accessory mounts (44) and one or more additional link members (56; 56'), wherein the first accessory device (38a) is dynamically coupled to the second accessory device (38b) via the link member (56; 56') and to at least one of the one or more additional accessory devices (38c, 38d, 38e) via the one or more additional link members (56; 56').

11. The accessory gearbox as defined in any one of the preceding claims, further comprising an additional link member (56; 56'), wherein the first accessory device (38a) is dynamically coupled to the second accessory device (38b) via the link member (56; 56') and the additional link member (56; 56').

12. An aircraft engine (10), comprising:
a main shaft extending through a core of the engine (10);
a tower shaft (34) drivingly engaged to the main shaft at a first end of the tower shaft (34); and
the accessory gearbox (30) as defined in any one of the preceding claims, the accessory gearbox (30) being disposed outside of the core of the engine (10), the accessory gearbox (30) drivingly engaged to the tower shaft (34) at a second end of the tower shaft (34).

13. A method for securing accessory devices (38a, 38b, 38c, 38d, 38e) to an accessory gearbox (30) of an aircraft engine (10), comprising:
securing a first accessory (38a) of the accessory devices (38a...38e) to a cover (40) of the accessory gearbox (30) at a first accessory mount (44) disposed on an outer surface (42) of the cover (40);
securing a second accessory (38b) of the accessory devices (38a...38e) to the cover (40) of the accessory gearbox (30) at a second accessory mount (44) disposed on the outer surface (42) of the cover (40), the second accessory mount (44) spaced apart from the first accessory mount (44); and
dynamically coupling the first accessory (38a) to the second accessory (38b) via a mechanical interconnection independent from the cover (40) of the accessory gearbox (30), by securing a first end (60; 60') of a link member (56; 56') to the first accessory (38a) and securing a second end (62; 62') of the link member (56; 56') to the second of the accessory devices (38b).

14. The method as defined in claim 13, further comprising:
securing a third accessory (38c) of the accessory devices (38a...38e) to the cover (40) of the accessory gearbox (30) at a third accessory mount (44) disposed on the outer surface (42) of the cover (40), and dynamically coupling the third accessory (38c) to one of the first accessory (38a) and the second accessory (38b) via an additional link member (56; 56'); and
optionally, installing a dynamic absorber (66') at a position along a length of the link member (56').

15. The method as defined in claim 14, further comprising dynamically coupling, via one of the link member (56; 56') and the additional link member (56'; 56'), a heaviest of the first accessory (38a), the second accessory (38b) and the third accessory (38c) to a lightest of the first accessory (38a), the second accessory (38b) and the third accessory (38c).
